Europäisches Patentamt

European Patent Office

Office européen des brevets

(11) Veröffentlichungsnummer: **0 199 126**

A2

(12) # EUROPÄISCHE PATENTANMELDUNG

(21) Anmeldenummer: **86104061.6**

(22) Anmeldetag: **25.03.86**

(51) Int. Cl.⁴: **B 05 D 3/12**
**B 29 C 59/02**

(30) Priorität: 27.03.85 DE 3511126

(43) Veröffentlichungstag der Anmeldung:
29.10.86 Patentblatt 86/44

(84) Benannte Vertragsstaaten:
AT BE CH DE FR GB IT LI NL SE

(71) Anmelder: Fraunhofer-Gesellschaft zur Förderung der angewandten Forschung e.V.
Leonrodstrasse 54
D-8000 München 19(DE)

(72) Erfinder: Brockmann, Walter, Dr.-Ing.
Am Heidbergstift 24
D-2820 Bremen 77(DE)

(72) Erfinder: Schmack, Günter, Dipl.-Ing.
Albrechtstrasse 40
D-1000 Berlin 41(DE)

(72) Erfinder: Käufer, Helmut, Prof. Dr.
Florastrasse 64
D-4020 Mettman(DE)

(54) Behandelte Kunststoffoberfläche und Verfahren zu deren Herstellung.

(57) Mit der Erfindung wird eine behandelte Kunststoffoberfläche und ein Verfahren zu deren Herstellung zur Werfügung gestellt. Die behandelte Kunststoffoberfläche zeichnet sich dadurch aus, daß sie eine zerfaserte Oberflächenstruktur hat, und sie ist in der Weise herstellbar, daß aus einer unzerfaserte Kunststoffoberfläche im viskoelastischen oder plastischen Zustand dieser Kunststoffoberfläche Kunststoffanteile herausgezogen werden, indem die viskoelastische oder plastische Kunststoffoberfläche mit einer haftenden Matrize in Kontakt gebracht und die haftende Matrize von der Kunststoffoberfläche weggezogen wird. Hierbei ergibt sich eine profilografische Kunststoffoberfläche, die durch ihre Zerfaserung eine formschlüssige Verbindung mit Klebstoffen, Lacken oder sonstigen Beschichtungsmitteln bildet, welche außerordentlich fest ist. Außerdem umfaßt die Erfindung die Anwendung einer solchen behandelten Kunststoffoberfläche.

FIG. 1

EP 0 199 126 A2

**Behandelte Kunststoffoberfläche und Verfahren zu deren Herstellung**

Die Erfindung bezieht sich auf eine behandelte Kunststoffoberfläche, die leicht klebbar, lackierbar und beschichtbar ist. Außerdem betrifft die Erfindung ein Verfahren zum Herstellen sowie die Anwendung dieser behandelten Kunststoffoberfläche.

Kunststoffe werden derzeit bei der Massenfertigung von Kunststoffteilen in großen Mengen vorzugsweise durch Spritzgießen, durch Extrudieren oder durch Kalandrieren verarbeitet. Hierbei werden dem Kunststoff Gleitmittel und Trennmittel zugesetzt, die ein späteres Beschichten des Kunststoffs mit Klebstoff oder Lack meist erheblich erschweren.

Außerdem gibt es Kunststoffe, die sich aufgrund ihrer chemischen Natur und aufgrund ihres Lösungsverhaltens nur schwer beschichten und verkleben lassen, so daß eine dauerhafte konstruktive Verklebung nicht möglich ist; ein wichtiges Beispiel für einen solchen Kunststoff ist Polypropylen.

Um diese Kunststoffe oder Kunststoffartikel aus derartigen Kunststoffen trotzdem verkleben oder beschichten zu können, müssen dieselben vorbehandelt werden. Die bekanntesten Vorbehandlungsverfahren dazu sind die Beizverfahren, Plasmabehandlung und Coronabehandlung. Diese Verfahren haben aber unter anderem den Nachteil, daß sie nicht in die eigentliche Teileherstellung mit einbezogen werden können.

Darüber hinaus sind diese Vorbehandlungsverfahren teilweise mit einem großen apparativen Aufwand verbunden. Sie sind weiter solche Verfahren, die erst nach der Erzeugung des jeweiligen Kunststoffteils eingesetzt werden können. Die Beschichtung und das Verkleben der so vorbehandelten Kunststoffteile muß innerhalb eines kurzen Zeitraums nach einer solchen Vorbehandlung erfolgen, da die dabei erreichte Adhäsionsfähigkeit nach relativ kurzer Zeit wieder verloren geht. Die so vorbehandelte Oberfläche darf nicht mit den Händen berührt und verschmutzt werden, da diese Einflüsse die Verklebbarkeit und Beschichtbarkeit weiter reduzieren.

Schließlich ist aus der DE-PS 3009 412 eine Kunststoffoberfläche der eingangs genannten Art bekannt, die dadurch erzielt wird, daß man eine übliche, relativ glatte Kunststoffoberfläche aufrauht, indem man sie zum Beispiel sandstrahlt. Dadurch wird ein Verkleben oder Beschichten der Kunststoffoberfläche ermöglicht. Nachteilig ist es hierbei aber, daß mit der so erzeugten rauhen Kunststoffoberfläche bei kleiner Klebefläche keine konstruktive Verklebung möglich ist, wenn zwischen Klebstoff und Kunststoff keine spezifische Adhäsion wirksam ist. Die Möglichkeit, den aufgerauhten Kunststoff zu verkleben oder zu beschichten, ist also nicht gegeben, wenn die spezifische Adhäsion verloren geht.

Aufgabe der Erfindung ist es daher insbesondere, eine behandelte Kunststoffoberfläche zur Verfügung zu stellen, die ein Verkleben, Lackieren, Beschichten o.dgl. auch dann ermöglicht, wenn keine spezifische Adhäsion zwischen dem Klebstoff, Lack, Beschichtungsmittel o.dgl. einerseits und dem Kunststoff andererseits vorhanden oder wenn eine an sich vorhandene spezifische Adhäsion nur schwach oder überhaupt nicht wirksam ist.

Diese Aufgabe wird erfindungsgemäß dadurch gelöst, daß die Kunststoffoberfläche eine faserige Oberflächenstruktur besitzt. Eine bevorzugte Ausführungsform einer solchen behandelten Kunststoffoberfläche zeichnet sich dadurch aus, daß sie wenigstens 100 bis 1000 Fasern pro $mm^2$, vorzugsweise mehr als 10 000 Fasern pro $mm^2$, aufweist.

Weiterhin ist es zu bevorzugen, daß die Länge der Fasern wenigstens 30 µm, vorzugsweise wenigstens 100 bis 300 µm, beträgt.

Weiterhin kann der Längenbereich, innerhalb deren die Längen der Fasern liegen, derart sein, daß die Länge der Fasern im wesentlichen im Bereich von 30 µm bis 3 mm, vorzugsweise im wesentlichen im Bereich von 100 µm bis 1 mm besonders bevorzugt hauptsächlich im Bereich von 300 um bis 1 mm liegt.

Eine solche behandelte Kunststoffoberfläche, die erfindungsgemäß eine faserige Oberflächenstruktur hat, ermöglicht es, Kunststoffteile an derartigen erfindungsgemäßen Kunststoffoberflächen konstruktiv form- und kraftschlüssig miteinander zu verkleben. Diese konstruktive Verklebung erhält ihre Festigkeit auch dann, wenn die spezifische Adhäsion zwischen Klebstoff und Kunststoff versagt, oder wenn diese nur schwach oder gar nicht wirksam ist. Ein langes Lagern oder ein Berühren dieser Kunststoffoberfläche mit der Hand vor der Verklebung beeinflußtdie Verklebbarkeit überhaupt nicht. Entsprechendes gilt für ein Lackieren und sonstiges Beschichten einer solchen Kunststoffoberfläche, die erfindungsgemäß eine faserige Oberflächenstruktur hat.

Außerdem wird mit der Erfindung ein Verfahren zum Herstellen einer behandelten Kunststoffoberfläche der erfindungsgemäßen Art zur Verfügung gestellt, bei dem eine im wesentlichen

glatte, zumindest unzerfaserte Kunststoffoberfläche zerfasert wird.

Eine besonders bevorzugte Ausführungsform dieses Verfahrens
zeichnet sich gemäß der Erfindung dadurch aus, daß es die
folgenden Verfahrensschritte des Zerfaserns umfaßt:

a) Überführen der im wesentlichen glatten, zumindest unzerfaserten Kunststoffoberfläche in den viskoelastischen
oder plastischen Zustand, oder Benutzung eines solchen
Zustands, der aufgrund einer Teilefertigung, zum Beispiel
Spritzgießen, Extrudieren o.dgl., vorliegt;

b) Kontaktieren der viskoelastischen oder plastischen
Kunststoffoberfläche mit einer eine Vielzahl von Vorsprüngen und Vertiefungen aufweisenden Matrize aus einem
am viskoelastischen oder plastischen Kunststoff haftenden Material derart, daß die Vorsprünge in Haftverbindung mit der Kunststoffoberfläche kommen;

c) Wegziehen der Matrize von der viskoelastischen oder plastischen Kunststoffoberfläche mit einer solchen Geschwindigkeit, daß sich der an den Vorsprüngen haftende
Kunststoff beim Wegziehen der Matrize nicht loslöst,
sondern unter Fadenziehen mitgenommen wird; und

d) Überführen der Kunststoffoberfläche in den festen,
nichtviskoelastischen und nichtplastischen Zustand.

Anstelle des vorstehenden Verfahrensschrittes b) kann ein
Einpressen einer eine Vielzahl von Vorsprüngen und Vertiefungen aufweisende Matrize in die viskoelastische oder plastische Kunststoffoberfläche derart erfolgen, daß Fasern aus letzterer herausgepreßt werden. Hierbei kann die Matrize sowohl aus einem am viskoelastischen oder plastischen Kunststoff haftendem oder nichthaftendem Material bestehen. Im letzteren Fall, beispielsweise bei einer aus Teflon bestehenden oder damit beschichteten Matrize, ist nur ein Einpressen möglich, so daß also der obige Verfahrensschritt c) entfällt, wogegen im ersteren Fall wahlweise zusätzlich zum Einpressen der Verfahrensschritt c) angewandt werden kann oder nicht.

Dieses Verfahren ist in einfacher Weise durchführbar, und zwar praktisch in jedem Stadium der Herstellung und/oder Verarbeitung des Kunststoffs, der mit einer erfindungsgemäßen behandelten Kunststoffoberfläche versehen werden soll, angefangen vom Stadium, in welchem der Kunststoff bei der Herstellung von Kunststoffteilen aus der Spritzgießmaschine, aus dem Extruder oder aus dem Kalander austritt und seine Oberfläche noch in einem viskoelastischen oder plastischen Zustand ist, bis hin zu dem Stadium, in welchem ein bereits seit langer Zeit hergestellter Kunststoffgegenstand aufgrund seiner erst dann vorgesehenen Verwendungsart verklebt, lackiert oder beschichtet werden soll.

Eine besonders bevorzugte Ausführungsform des erfindungsgemäßen Verfahrens zeichnet sich dadurch aus, das die Matrize eine Mindestdichte von 100 bis 1000 Vorsprüngen pro $mm^2$, vorzugsweise von 10 000 Vorsprüngen pro $mm^2$, hat.

Schließlich ist es zu bevorzugen, daß die im wesentlichen glatte, zumindest unzerfaserte Kunststoffoberfläche durch Erwärmen in den viskoelastischen oder plastischen Zustand und durch Abkühlen oder Abkühlenlassen in den festen, nichtviskoelastischen und nichtplastischen Zustand gebracht wird. Das kann, wie bereits erwähnt, dadurch geschehen, daß die Kunststoffoberfläche im erfindungsgemäßen Verfahren in dem Zustand ihrer Herstellung, in welchem sie noch einen viskoelastischen oder plastischen Zustand hat, dem Zerfasern unterworfen wird, oder dadurch, daß die Kunststoffoberfläche eines bereits seit einiger Zeit hergestellten Kunststoffgegenstandes in entsprechender Weise durch Infrarotstrahler oder sonstige Erhitzungseinrichtungen so weit erhitzt wird, daß sie einen viskoelastischen oder plastischen Zustand annimmt.

Wie Untersuchungen, die im Rahmen der Erfindung durchgeführt wurden, gezeigt haben, gibt es eine Vielzahl von verschiedenen Materialien, die als haftende oder nichthaftende Matrize verwendet werden können:

So läßt sich das erfindungsgemäße Verfahren in der Weise ausführen, daß als vorgenannte Matrize ein Gewebe aus Naturfaser, Kunststoffaser, Metallfaser oder Mineralfaser, Leder oder Filz verwendet wird. Weiter ist es möglich, daß als vorgenannte Matrizen Sinterwerkstoffe aus mineralischen, metallischen oder organischen Werkstoffen verwendet werden. Schließlich können als vorgenannte Matrize rauhe oder oberflächenporöse mineralische, metallische oder organische Werkstoffe verwendet werden.

Beim Zerfasern einer Kunststoffoberfläche kann der Kunststoff dieser Fasern während des Wegziehens der Matrize gereckt werden (Zugreckung), oder er kann beim Eindrücken der Matrize, wenn dabei schon die Fasern gebildet werden, ebenfalls gereckt werden (Preßreckung). Da diese Fasern durch das Ziehen und das Herauspressen immer orientierte Kunststoffmoleküle aufweisen, ist ihre Festigkeit größer als die des vorgelegten Kunststoffs.

Eine noch andere Weiterbildung des erfindungsgemäßen Verfahrens ist dadurch gekennzeichnet, daß beim Zerfasern einer teilkristallinen Kunststoffoberfläche der Nukleierungsgrad des Kunststoffs dieser Kunststoffoberfläche aber insbesondere innerhalb der Fasern verändert wird und somit bessere mechanische Werte erreicht werden.

Schließlich ist es auch möglich, das Verfahren so auszuführen, daß beim Zerfasern von Polyolefinen funktionelle Gruppen auf der Kunststoffoberfläche gebildet werden.

Endlich betrifft die Erfindung auch die Anwendung der erfindungsgemäßen behandelten Kunststoffoberfläche, die darin besteht, daß diese Kunststoffoberfläche mittels eines Klebstoffs mit einer anderen Oberfläche verklebt oder diese Kunststoffoberfläche- lackiert oder mit einem Beschichtungsmittel beschichet wird.

Die Erfindung sei nunmehr unter Bezugnahme auf die Figuren 1 bis 3 der Zeichnung anhand einiger Ausführungsbeispiele näher erläutert; es zeigen:

Figur 1 eine Anlage zur Durchführung des erfindungsgemäßen Verfahrens an Kunststoffteilen, die bereits seit einiger Zeit hergestellt worden sind, also nicht unmittelbar den Herstellungsvorgang verlassen;

Figur 2 eine rasterelektronenmikroskopische Aufnahme einer zerfaserten Kunststoffoberfläche, wobei die Kunststoffoberfläche aus Polypropylen besteht; und

Figur 3 eine rasterelektronenmikroskopische Aufnahme bei der die unbehandelte, die behandelte Oberfläche sowie

8

die Matrize sichtbar ist.

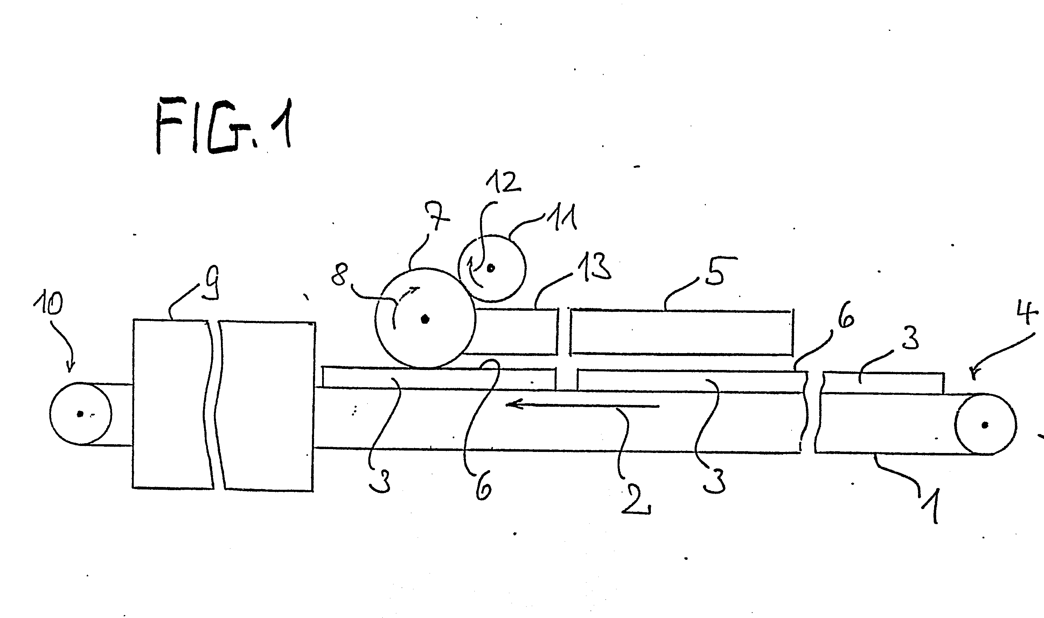

Es sei zunächst auf Figur 1 Bezug genommen, die eine Vorrichtung zur Durchführung des erfindungsgemäßen Verfahrens an bereits seit einiger Zeit gefertigten Kunststoffteilen zeigt, obwohl es in den Fällen, in denen man von vornherein weiß, daß die in Frage stehenden Kunststoffteile verklebt, lackiert oder beschichtet werden sollen, zu bevorzugen ist, diese Kunststoffteile bereits unmittelbar bei ihrer Herstellung bzw. im unmittelbaren Anschluß an ihre Herstellung mit einer zerfaserten Oberfläche zu versehen.

Die Vorrichtung nach Figur 1 umfaßt einen Bandförderer 1, dessen Förderrichtung durch den Pfeil 2 angedeutet ist und auf den die mit einer zerfaserten Kunststoffoberfläche zu versehenden Kunststoffteile 3 am Aufgabeende 4 aufgebracht werden. Diese Kunststoffteile 3 laufen unter einer

Infraroterwärmungsanlage 5 durch, auf der ihre zu zerfasernde Kunststoffoberfläche 6 durch Erwärmen in einen viskoelastischen oder plastischen Zustand gebracht wird. Danach läuft die Kunststoffoberfläche 6 unter einer walzenförmigen Matrize 7 derart hindurch, daß diese walzenförmige Matrize 7 auf der Kunststoffoberfläche 6 abrollt. Diese Matrize 7 hat eine Vielzahl von in der Zeichnung nicht dargestellten Vorsprüngen und Vertiefungen und ist aus einem solchen Material oder weist auf ihrer Oberfläche ein solches Material auf, daß die Kunststoffoberfläche 6 an den Stellen, an denen sie von den Vorsprüngen berührt wird, an diesen Vorsprüngen der Matrize 7 anhaftet. Wenn sich die walzenförmige Matrize 7 in der durch den Pfeil 8 angegebenen Drehrichtung weiterdreht, wird die Oberfläche der Matrize von der eben berührten Stelle der viskoelastischen oder plastischen Kunststoffoberfläche 6 weggezogen.

Die Drehgeschwindigkeit der walzenförmigen Matrize 7 ist derart, daß sich der an den Vorsprüngen der Matrize 7 haftende Kunststoff beim Wegziehen der Matrize nicht loslöst, sondern unter Fadenziehen mitgenommen wird. Dadurch wird die Kunststoffoberfläche 6 zerfasert.

Anschließend laufen die Kunststoffteile 3 durch einen Kühltunnel 9, der beispielsweise durch Blasluft betrieben wird, und in dem die nun zerfaserte Kunststoffoberfläche 6 so weit abgekühlt wird, daß sie in den nichtviskoelastischen bzw. nichtplastischen Zustand übergeht. Dann können die Kunststoffteile am Abgabeende 10 fertig behandelt abgenommen werden.

Mit 11 ist eine Reinigungswalze bezeichnet, deren Drehrichtung durch den Pfeil 12 angedeutet ist. Diese Reinigungswalze 11 reinigt die Oberfläche der Matrize 7 von den daran anhaftenden Kunststoffteilchen, die aus der Kunststoffoberfläche 6 mittels der Matrize 7 herausgezogen worden sind, und gibt sie in einen daruntr befindlichen Abfallbehälter 13 ab.

Selbstverständlich ist die Form der Matrize nicht auf die Walzenform beschränkt, sondern es sind praktisch alle denkbaren Matrizenformen möglich, wobei plattenförmige und bandförmige neben walzenförmigen Matrizen besonders zu bevorzugen sind.

Außerdem können derartige Matrizen, mit denen die Kunststoffoberfläche zerfasert wird, wie bereits erwähnt, am Ausgang von Herstellungsvorrichtungen für Kunststoffteile vorgesehen oder in solche Herstellungsvorrichtungen integriert sein.

Art und Ausmaß der Zerfaserung können im Übrigen so gesteuert werden, daß die haftende Matrize in einem bestimmten, für jeden Kunststoff unterschiedlichen Viskositätszustand der Kunststoffoberfläche von dieser abgezogen oder in diese eingepreßt wird.

Die Länge der beim Zerfasern mittels der Matrize von der zu zerfasernden Kunststoffoberfläche abgezogenen Kunststoffäden und damit Art und Ausmaß der Zerfaserung der Kunststoffoberfläche können weiter dadurch eingestellt werden, daß die Dicke der Kunststoffoberfläche, in welcher diese viskoelastisch oder plastisch ist, also die Dicke der viskoelastischen oder plastischen Kunststoffschicht der zu zerfaserenden Kunststoffoberfläche entsprechend variiert wird.

Außerdem kann die Länge der Kunststoffäden durch die Abzugsgeschwindigkeit der Matrize von der Kunststoffoberfläche eingestellt werden.

Schließlich läßt sich die Anzahl der Kunststoffanteile, die aus der zu zerfasernden Kunststoffoberfläche herausgezogen werden, durch die Anzahl der Verhakungsstellen in der haftenden Matrize einstellen, also die Anzahl der Stellen, an denen der Kunststoff an der Matrizenoberfläche haftet.

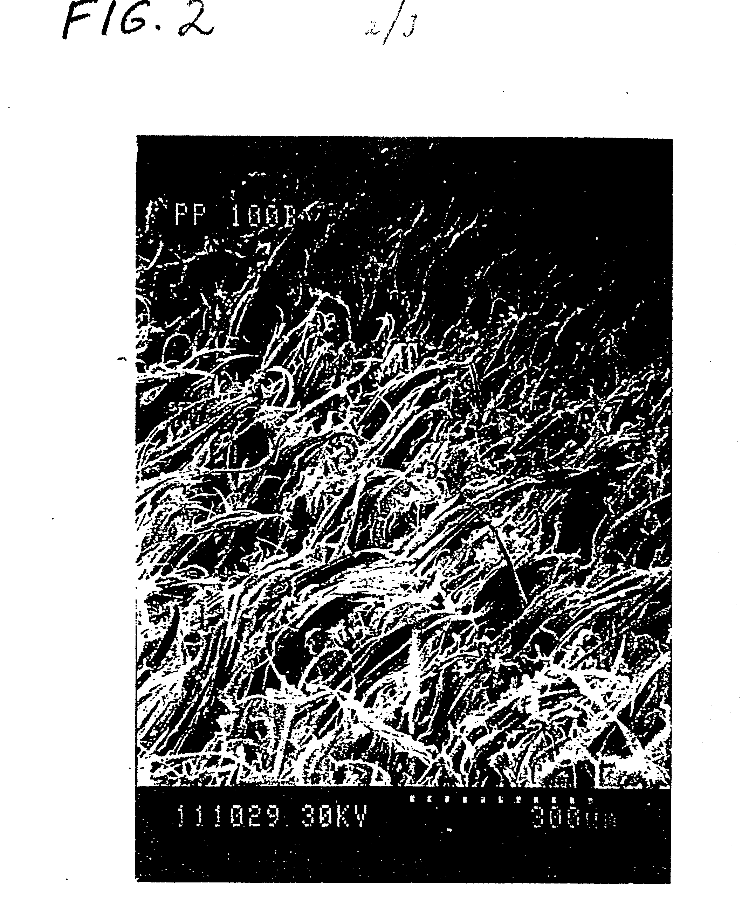

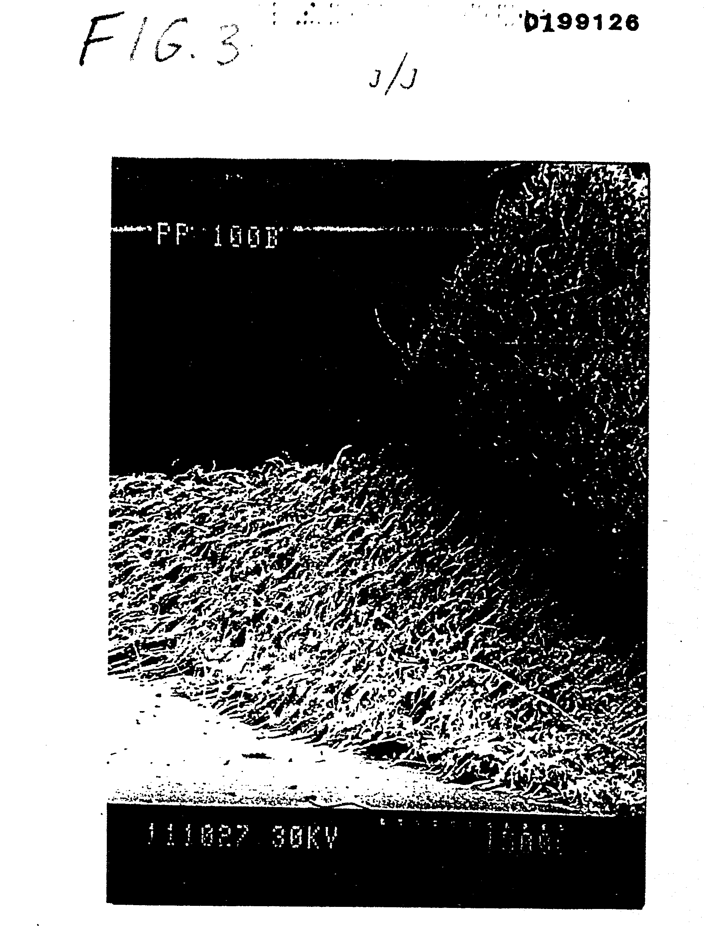

In den Figuren 2 und 3 sind erfindungsgemäß zerfaserte Kunststoffoberflächen aus Polyprobylen in rasterelektronenmikroskopischer Vergrößerung gezeigt, wobei jeweils rechts unten der Maßstab angegeben ist. Man sieht, daß es bei einer solchen zerfaserten Oberfläche überhaupt nicht mehr auf eine Adhäsion zwischen dieser Oberfläche einerseits und einem Klebstoff, Lack oder sonstigen Beschichtungsmittel andererseits ankommt, sondern daß vielmehr eine formschlüssige Verbindung .zwischen dem Klebstoff, Lack oder sonstigen Beschichtungsmittel und der zerfaserten Kunststoffoberfläche
entsteht, die sich wegen des innigen Ineinandergreifens der
verfestigten Klebstoff-, Lack- oder sonstigen Beschichtungsmittelschicht mit den Fasern der Kunststoffoberfläche ergibt, weil diese Materialien durch ihre immer vorhandene
Schwindung auf die Fasern aufschrumpfen.

Figur 3 zeigt besonders deutlich wie die Oberfläche entsteht. Die unbehandelte Oberfläche, die behandelte und die
Matrize sind deutlich zu erkennen. Die Matrize ist hierbei
teilweise abgezogen.

Die Erfindung sei nachstehend noch weiter anhand von einem
Vergleichsbeispiel, das sich auf ein Verkleben von Kunststoff nach dem Stand der Technik bezieht, und anhand eines
Beispiels, das sich auf ein Verkleben von Kunststoff mit
zerfaserter Kunststoffoberfläche bezieht, erläutert:

Vergleichsbeispiel eines Verklebens von Kunststoff nach dem
Stand der Technik

Polypropylen ist ein Kunststoff, der von Natur aus nicht
bzw. sehr schlecht verklebbar ist. Führt man eine Vorbehandlung von Polypropylen mit Chromschwefelsäure durch, so
kann auch dieser Kunststoff verklebt werden. Es wurden Zugscherfestigkeiten bei einfach überlappter Kunststoff-Metall-
Verklebung mit Epoxidklebstoff von ca. 8 N/mm$^2$ für vorbehandelte Kunststoffoberflächen gemessen. Bei der Behandlung
wird das Kunststoffteil ca. 3 min. ganz oder teilweise in
ein 90°C warmes Chromschwefelsäurebad eingetaucht. Danach
ist ein Spülen mit Wasser und Trocknen notwendig. Die so
vorbehandelte Oberfläche darf nicht mehr berührt und auch
nicht verschmutzt werden, bevor der Kunststoff verklebt wird. Es ist daher eine baldige Verklebung nach der Vorbehandlung notwendig. Die Vorbehandlung erzeugt auf der Oberfläche keine oder nur sehr geringe sichtbare Veränderungen der Oberflächenstruktur. Versagt die spezifische Adhäsion zwischen Klebstoff und Kunststoff, so versagt die Verklebung.

Beispiel eines Verklebens von Kunststoff mit zerfaserter Kunststoffoberfläche

Erzeugt man erfindungsgemäß eine zerfaserte Kunststoffoberfläche auf Polypropylen, so werden Festigkeiten von ebenfalls 8 N/mm$^2$ (Zugscherfestigkeit) erreicht, und zwar bei wesentlich besserem Zeitstandsverhalten als sie bei chemisch vorbehandelten Kunststststoffteilen erreicht werden. Die Kunststoffteile mit der erfindungsgemäßen zerfaserten Kunststoffoberfläche sind wesentlich unempfindlicher gegen Verschmutzung. Sie sind daher lagerfähig und können ohne nochmalige Vorbehandlung zu einem wesentlich späteren Zeitpunkt verklebt werden. Versagt die spezifische Adhäsion zwischen Kunststoff und Klebstoff, so ist die Festigkeit der Verklebung durch das formschlüssige Ineinandergreifen des Klebstoffes und der zerfaserten Kunststoffoberfläche weiterhin gesichert.

Die zerfaserte Kunststoffoberfläche kann kontinuierlich in der Fertigung des Kunststoffteiles innerhalb von bespielsweise 20 sec. erzeugt werden, während dagegen eine chemische Vorbehandlung die 30fache Zeit, nämlich 5 Minuten erfordert.

Nebenprodukte, wie sie zum Beispiel beim Beizen entstehen, fallen nicht an.

Abschließend sei darauf hingewiesen, daß unter eine Matrize, die aus einem am viskoelastischen oder plastischen Kunststoff haftendem oder nichthaftendem Material besteht, sowohl eine Matrize, die vollständig aus einem solchen Material besteht, als auch eine Matrize, die nur an ihrer mit dem viskoelastischen oder plastischen Kunststoff zusammenwirkenden Oberfläche aus einem solchen Material besteht, also zum Beispiel mit einem solchen Material beschichtet ist, verstanden werden soll.

PATENTANSPRÜCHE

1. Behandelte Kunststoffoberfläche zum Verkleben, Lackieren und Beschichten mit gleichartigen und/oder anderen Materialen, dadurch gekennzeichnet, daß die Kunststoffoberfläche (6) eine faserige Struktur besitzt.

2. Behandelte Kunststoffoberfläche nach Anspruch 1, dadurch gekennzeichnet, daß sie wenigstens 100 bis 1000 Fasern pro mm$^2$ aufweist.

3. Behandelte Kunststoffoberfläche nach Anspruch 2, dadurch gekennzeichnet, daß sie mehr als 10 000 Fasern pro mm$^2$ aufweist.

4. Behandelte Kunststoffoberfläche nach Anspruch 1,2 oder 3, dadurch gekennzeichnet, daß die Länge der Fasern wenigsten 30 um beträgt.

5. Behandelte Kunststoffoberfläche nach Anspruch 1, 2 oder 3, dadurch gekennzeichnet, daß die Länge der Fasern wenigstens 100 bis 300 um beträgt.

6. Behandelte Kunststoffoberfläche nach Anspruch 4, dadurch gekennzeichnet, daß die Länge der Fasern im Bereich von 30 um bis 3 mm liegt.

7. Behandelte Kunststoffoberfläche nach Anspruch 5, dadurch gekennzeichnet, daß die Länge der Fasern im Bereich von 100 um bis 1 mm liegt.

8. Behandelte Kunststoffoberflächenach Anspruch 5, dadurch

gekennzeichnet, daß die Länge der Fasern im Bereich von 300 µm bis 1 mm liegt.

9. Verfahren zum Herstellen einer behandelten Kunststoffoberfläche nach einem der Ansprüche 1 bis 8, dadurch gekennzeichnet, daß die unzerfaserte Kunststoffoberfläche (6) zerfasert wird.

10. Verfahren nach Anspruch 9, dadurch gekennzeichnet, daß es die folgenden Verfahrensschritte des Zerfaserns umfaßt:

a) Überführen der unzerfaserten Kunststoffoberfläche (6) in den viskoelastischen oder plastischen Zustand, oder Benutzung eines solchen Zustands, der aufgrund einer Teilefertigung vorliegt;

b) in Haftverbindung bringen der Vorsprünge einer eine Vielzahl von Vorsprüngen und Vertiefungen aufweisenden Matrize (7) aus einem am viskoelastischen oder plastischen Kunststoff haftenden Material mit der viskoelastischen oder plastischen Kunststoffoberfläche (6);

c) Wegziehen der Matrize (7) von der viskoelastischen oder plastischen Kunststoffoberfläche (6) bei Mitnahme des an den Vorsprüngen haftenden Kunststoffs unter Fadenziehen; und

d) Überführen der Kunststoffoberfläche (6) in den festen, nichtviskoelastischen und nichtplastischen Zustand.

11. Verfahren nach Anspruch 9, dadurch gekennzeichnet, daß es die folgenden Verfahrensschritte des Zerfaserns umfaßt:

a) Überführen der unzerfaserten Kunststoffoberfläche (6) in den viskoelastischen oder plastischen Zustand, oder Benutzung eines solchen Zustands, der aufgrund einer Teilefertigung vorliegt;

b) Herauspressen von Fasern aus der Kunststoffoberfläche (6) durch Einpressen einer eine Vielzahl von Vorsprüngen und Vertiefungen aufweisenden Matrize (7) in die viskoelastische oder plastische Kunststoffoberfläche (6), und

c) Überführen der Kunststoffoberfläche (6) in den festen, nichtviskoelastischen und nichtplastischen Zustand.

12 Verfahren nach Anspruch 11, dadurch gekennzeichnet, daß zwischen den Verfahrensschritten (b) und (c) bei Verwendung einer Matrize (7) aus einem am viskoelastischen oder plastischen Kunststoff haftendem Material der Verfahrensschritt des Wegziehens der Matrize (7) von der viskoelastischen oder plastischen Kunststoffoberfläche (6) bei Mitnahme des an den Vorsprüngen haftenden Kunststoffs unter Fadenziehen durchgeführt wird.

13 Verfahren nach einem der Ansprüche 10 bis 12, dadurch gekennzeichnet, daß die Matrize (7) eine Mindestdichte von 100 bis 1000 Vorsprüngen pro $mm^2$ hat.

14. Verfahren nach einem der Ansprüche 10 bis 12, dadurch gekennzeichnet, daß die Matrize (7) eine Mindestdichte von 10 000 Vorsprüngen pro $mm^2$ hat.

15. Verfahren nach einem der Ansprüche 10 bis 12, dadurch gekennzeichnet, daß die unzerfaserte Kunststoffoberfläche (6) durch Erwärmen in den viskoelastischen oder plastischen Zustand und durch Abkühlen oder Abkühlenlassen in den festen, nichtviskoelastischen und nichtplastischen Zustand gebracht wird.

16. Verfahren nach einem der Ansprüche 10 bis 14, dadurch gekennzeichnet, daß als Matrize (7) ein Gewebe aus Naturfaser, Kunststoffaser, Metallfaser oder Mineralfaser, Leder oder Filz verwendet wird.

17. Verfahren nach einem der Ansprüche 10 bis 14, dadurch gekennzeichnet, daß als Matrize (7) Sinterwerkstoffe aus mineralischen, metallischen oder organischen Werkstoffen verwendet werden.

18. Verfahren nach einem der Ansprüche 10 bis 14, dadurch gekennzeichnet, daß als Matrize (7) rauhe oder oberflächenporöse mineralische, metallische oder organische Werkstoffe verwendet werden.

19. Verfahren nach einem der Ansprüche 10 bis 12, dadurch gekennzeichnet, daß beim Zerfasern der Kunststoffoberfläche (6) der Kunststoff dieser Kunststoffoberfläche (6) während des Einpressens und/oder Wegziehens der Matrize (7) durch Anwendung von niedrigen Oberflächentemperaturen beim viskoelastischen Zustand eine besonders wirksame Reckung der Fasern und

20. Verfahren nach einem der Ansprüche 9 bis 12, dadurch gekennzeichnet, daß beim Zerfasern einer teilkristallinen Kunststoffoberfläche (6) der Nukleierungsgrad des Kunststoffs dieser Kunststoffoberfläche (6) verändert wird.

21. Verfahren nach einem der Ansprüche 9 bis 12, dadurch gekennzeichnet, daß beim Zerfasern von Polyolefinen funktionelle Gruppen auf der Kunststoffoberfläche (6) gebildet werden.

22. Anwendung der behandelten Kunststoffoberfläche nach einem der Ansprüche 1 bis 21, dadurch gekennzeichnet, daß diese Kunststoffoberfläche (6) mittels eines Klebstoffs mit einer anderen Oberfläche verklebt oder diese Kunststoffoberfläche (6) lackiert oder mit einem Beschichtungsmittel beschichtet wird.

FIG.1

FIG. 2 2/3

FIG.3

PP 100B

111027 30KV